# EUROPÄISCHE PATENTSCHRIFT

(11) **EP 1 296 069 B1**
(45) Veröffentlichungstag und Bekanntmachung des Hinweises auf die Patenterteilung: **29.03.2006**
(21) Anmeldenummer: 02018896.7
(22) Anmeldetag: 23.08.2002
(51) Int. Cl.: F16B 35/04, F16B 33/00, F16B 35/06, F16B 37/06, F16B 37/04, B60Q 1/30

(54) **Abgedichtete, verstellbare und selbsthemmende Schraubverbindung**
Sealed, adjustable and self-restraining threaded joint
Assemblage vissé étanche, réglable et autofreiné

(30) Priorität: 25.09.2001 DE 10147141
(43) Veröffentlichungstag der Anmeldung: 26.03.2003
(73) Patentinhaber: Böllhoff GmbH, 33649 Bielefeld (DE)
(72) Erfinder: Dembowsky, Hans-Joachim, 21035 Hamburg (DE); Wenniges, Theodor, Dr., 33154 Salzkotten-Veme (DE); Süssenbach, Rainer, 33803 Steinhagen (DE)
(74) Vertreter: Wehnert, Werner

(56) Entgegenhaltungen:
- EP-A- 0 373 641
- EP-A- 0 533 513
- EP-A- 1 085 221
- DE-B- 1 213 172
- DE-C- 3 926 000
- DE-U- 20 005 809
- US-A- 5 540 528

## Beschreibung

Die vorliegende Erfindung betrifft eine Schraubverbindung aus einer Mutter und einer Schraube.

Schraubverbindungen sind in großer Vielfalt bekannt. Ziel der vorliegenden Erfindung ist es, eine Schraubverbindung zu schaffen, bei der sich die Schraube relativ zu der Mutter verstellen lässt und die Schraubverbindung dann in der jeweils eingestellten Lage selbsthemmend ist. Darüber hinaus soll die Schraubverbindung fluiddicht sein und auch bei Verstellungen der Schraubverbindung fluiddicht bleiben.

Eine Anwendungsmöglichkeit einer derartigen Schraubverbindung ist beispielsweise die Befestigung einer Fahrzeug-Rückleuchte an einem Karosserieblech. Zwischen der Fahrzeugleuchte und anderen Karosserieteilen ist üblicherweise ein Spalt vorhanden, der insbesondere aus ästhetischen Gründen möglichst klein gehalten werden soll. Dies soll durch die Verstellbarkeit der Schraubverbindung ermöglicht werden. Damit die Rückleuchte trotz Fahrzeugschwingungen und -erschütterungen in ihrer eingestellten Lage bleibt, soll die Schraubverbindung selbsthemmend sein. Schließlich soll gewährleistet werden, dass keine Flüssigkeiten oder andere Fluide über die Schraubverbindung in den Innenraum der Rückleuchte gelangt.

Aus US-A-5 540 528 ist eine Schraubverbindung nach dem Oberbegriff des Anspruchs 1 bekannt. Bei der dort gezeigten Schraubverbindung besteht der Kopfteil der Schraube aus einem abgerundeten flanschartigen Schraubenkopf mit einer Sechskantschlüsselöffnung.

Der vorliegenden Erfindung liegt die Aufgabe zugrunde, eine Schraubverbindung zu schaffen, die fluiddicht, lageverstellbar und selbsthemmend ist.

Diese Aufgabe wird durch die in Anspruch 1 definierte Erfindung gelöst.

Erfindungsgemäß ist die Schraube an einem Zwischenabschnitt mit einer oder mehreren umlaufenden Dichtungsrippen versehen, die bezüglich eines glatten, vorzugsweise zylindrischen Bohrungsabschnittes der Mutter so dimensioniert sind, dass sie elastisch gegen den glatten Bohrungsabschnitt angedrückt werden, damit die Schraubverbindung in der jeweils eingestellten Lage selbsthemmend und fluiddicht ist.

Die Schraube besteht zweckmäßigerweise aus einem schlagzähen Kunststoff wie z. B. Polyamid mit einer Faserverstärkung, insbesondere Glasfaserverstärkung, um eine entsprechende elastische Verformung der Dichtungsrippen der Schraube zu ermöglichen. Die Mutter kann aus Metall oder Kunststoff bestehen.

Im einfachsten Fall ist die Mutter als Blindnietmutter ausgebildet. Eine andere Möglichkeit besteht darin, die Mutter als Clip auszubilden, der in ein Loch des zugehörigen Bauteils einrastbar ist.

Weitere vorteilhafte Ausgestaltungen der Erfindung gehen aus den Unteransprüchen hervor.

Anhand der Zeichnungen werden Ausführungsbeispiele der Erfindung näher erläutert. Es zeigt:
Fig. 1 eine erste Ausführungsform einer Schraubverbindung im zusammengebauten Zustand;
Fig. 2 eine Seitenansicht einer Schraube der Schraubverbindung in Fig. 1;
Fig. 3 eine Unteransicht der Schraube in Fig. 2;
Fig. 4 eine Draufsicht auf die Schraube in Fig. 2;
Fig. 5 eine vergrößerte Detailansicht des Bereiches innerhalb des Kreises V in Fig. 1;
Fig. 6 ein zweites Ausführungsbeispiel einer Schraubverbindung im zusammengebauten Zustand;
Fig. 7 das Loch eines der beiden Bauteile, die durch die Schraubverbindung in Fig. 6 miteinander verbunden sind;
Fig. 8 einen Längsschnitt durch die Mutter der Schraubverbindung in Fig. 6;
Fig. 9 eine Schnittansicht in Blickrichtung der Pfeile IX-IX in Fig. 8;
Fig. 10 eine Seitenansicht der Mutter in Fig. 8 bei der Montage.

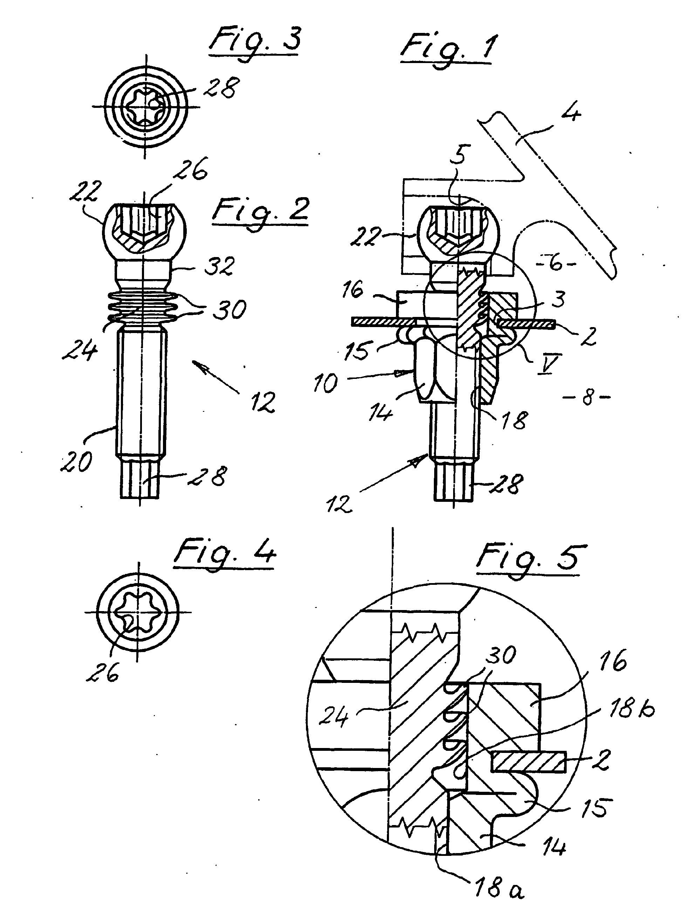

Die in Fig. 1 dargestellte Schraubverbindung dient zum Verbinden eines Bauteils 2 und eines Bauteils 4. Das Bauteil 2, das mit einem Loch 3 versehen ist, ist beispielsweise ein Karosserieblech eines Fahrzeuges, während das Bauteil 4 beispielsweise der Halter einer Rückleuchte (nicht gezeigt) ist. Wie bereits eingangs erläutert, ist zwischen der Rückleuchte und anderen Fahrzeugteilen üblicherweise ein Spalt (nicht gezeigt) vorhanden, der durch die Verstellbarkeit der Schraubverbindung minimiert werden soll. Damit die Schraubverbindung trotz Fahrzeugschwingungen und -erschütterungen in der eingestellten Lage verbleibt, soll sie selbstsichernd bzw. selbsthemmend sein. Darüber hinaus soll sie fluiddicht sein, damit keine Fluide wie Wasser, Öl- und Benzindämpfe, etc. aus der Umgebung 8 in den Innenraum 6 gelangen können.

Die Schraubverbindung besteht aus einer Mutter 10 und einer Schraube 12. Bei dem in Fig. 1 dargestellten Ausführungsbeispiel ist die Mutter 10 eine Blindnietmutter, die im Wesentlichen herkömmlicher Bauart sein kann. Wie gezeigt, besteht die Mutter 10 aus einem Körper 14 und einem daran angeformten Flansch 16, die mit einer durchgehenden Bohrung 18 versehen sind. Die Bohrung 18 (siehe Fig. 5) setzt sich aus einem Gewindeabschnitt 18a und einem daran anschließenden glatten zylindrischen Abschnitt 18b vergrößerten Durchmessers zusammen. Der glatte zylindrische Abschnitt 18b der Bohrung 18 hat aus noch zu erläuternden Gründen eine vergleichsweise große axiale Länge.

Wie aus Fig. 1 und insbesondere Fig. 2 hervorgeht, besteht die Schraube 12 aus einem Gewindeschaft 20, einem Kupplungsteil 22 und einem Zwischenabschnitt 24. Der Zwischenabschnitt 24 ist mit dem Kupplungsteil 22 über einen zylindrischen Abschnitt 32 verbunden. Der Kupplungsteil 22 ist als Kugelkopf ausgebildet, der im zusammengebauten Zustand der Schraubverbindung (Fig. 1) von einem als Kugelpfanne ausgebildeten Kupplungsteil 5 des Bauteils 4 aufgenommen wird. Hierdurch entsteht eine lösbare Kupplung zwischen der Schraube 12 und dem Bauteil 4, die eine begrenzte, allseitige Verschwenkbarkeit zwischen diesen Teilen ermöglicht.

Der Kupplungsteil 22 der Schraube 12 ist mit einer Antriebsformation 26 versehen, die im dargestellten Ausführungsbeispiel als Innensechsrund ausgebildet ist (Fig. 4). Der Gewindeabschnitt 20 ist an seinem von dem Kupplungsteil 22 abgewandten Ende mit einer Antriebsformation 28 versehen, die als Außensechsrund ausgebildet ist (Fig. 3). Die Antriebsformationen 26 und 28 ermöglichen eine Grob- und Feineinstellung der Schraube, wie ebenfalls noch genauer erläutert wird.

Der Zwischenabschnitt 24 ist mit drei umlaufenden Dichtungsrippen 30 versehen. Je nach Anwendungszweck können jedoch auch mehr oder weniger Dichtungsrippen vorgesehen werden. Die Dichtungsrippen 30 dienen einerseits als Dichtung und andererseits als Schraubensicherung, wie noch genauer erläutert wird.

Zum Zusammenbau der in Fig. 1 gezeigten Schraubverbindung wird zunächst die Mutter 10 von oben in das Loch 3 des Bauteils 2 eingesteckt, das zur Drehsicherung der Mutter 10 unrund ist. Die als Blindniet ausgebildete Mutter 10 wird dann mit einem herkömmlichen Setzwerkzeug (nicht gezeigt) über ein Einspindeln einer Montagespindel aus Stahl in den Gewindeabschnitt 18a der Mutterbohrung 18 und dem Falten einer Wulst 15 zwischen dem Flansch 16 und dem Bauteil 2 festgeklemmt. Die Schraube 12 kann dann in die Mutterbohrung 18 eingeschraubt werden.

Bei dem Ausführungsbeispiel der Fig. 1 ist die Mutterbohrung 18 durchgehend ausgebildet, so dass sie an beiden Enden offen ist. Die Schraube 12 steht mit ihrer Antriebsformation 28 über das untere Ende der Mutter 10 vor. Somit kann die Schraube 12 mit Hilfe der Antriebsformation 26 im Kupplungsteil 22 zunächst grob eingestellt werden. Wenn dann das Bauteil 4 über die Kupplungsteile 5 und 22 mit der Schraube 12 verbunden ist, kann mit Hilfe der Antriebsformation 28 am unteren Ende der Schraube 12 eine Feineinstellung der Schraubverbindung vorgenommen werden.

Beim Einschrauben der Schraube 12 in die Mutter 10 treten die Dichtungsrippen 30 in den glatten zylindrischen Abschnitt 18b der Mutterbohrung 18 ein. Wie insbesondere aus Fig. 5 hervorgeht, sind die Dichtungsrippen 30 gegenüber dem Durchmesser des glatten zylindrischen Abschnittes 18b so überdimensioniert, dass sie mit einer bestimmten Anpresskraft gegen die Wandung des glatten zylindrischen Abschnittes 18b angedrückt und geringfügig umgebogen werden, wobei diese elastische Verformung der Dichtungsrippen 30 in Fig. 5 der Deutlichkeit halber übertrieben dargestellt ist. Das Übermaß der Dichtungsrippen 30 wird so gewählt, dass trotz relativ großer Fertigungstoleranzen eine ausreichende Anpresskraft erzeugt wird, um einerseits für eine einwandfreie Abdichtung der Schraubverbindung und andererseits für eine Sicherung bzw. Selbsthemmung der Schraubverbindung zu sorgen.

Damit die Dichtungsrippen 30 diese Doppelfunktion ausüben können, müssen sie ähnlich wie Tellerfedern nachgiebig und elastisch sein. Zu diesem Zweck besteht die Schraube 12 aus einem schlagzähen Kunststoff wie z. B. Polyamid. Der Kunststoff enthält eine Faserverstärkung wie z. B. eine Glasfaserverstärkung. Die als Blindnietmutter ausgebildete Mutter 10 besteht dagegen aus Metall, insbesondere Stahl, und wird üblicherweise durch Kaltschlagen hergestellt.

Die Fign. 6 bis 10 zeigen ein zweites Ausführungsbeispiel einer Schraubverbindung zum Verbinden der Bauteile 2 und 4. Teile, die mit Teilen des vorhergehenden Ausführungsbeispiels identisch sind, wurden mit denselben Bezugszeichen bezeichnet. Entsprechende, jedoch etwas anders gestaltete Teile wurden mit den Bezugszeichen des vorhergehenden Ausführungsbeispiel, jedoch erhöht um 100 bezeichnet.

Das Ausführungsbeispiel der Fign. 6 bis 10 unterscheidet sich von dem vorhergehenden Ausführungsbeispiel im wesentlichen durch die Ausgestaltung der Mutter 110. Die Mutter 110 ist als Clip ausgebildet, der in das Loch 3 des Bauteils 2 eingerastet werden kann. Zu diesem Zweck ist die Mutter 110 an ihrem oberen Ende mit einem Federteller 116 versehen, der an dem Körper 114 einstückig angeformt ist. An dem Körper 114 sind ferner Rasten 115 angeformt. Die Rasten 115 bestehen aus einer Federzunge 115a, die von einer Seite des Körpers 114 schräg nach oben verläuft, sowie einem massiven Rastvorsprung 115b, der auf der der Federzunge 115a gegenüberliegenden Seite des Körpers 114 vorgesehen und mit einer Rastschulter versehen ist. Das freie Ende der Federzunge 115a und die Rastschulter des Rastvorsprungs 115b liegen in einer gemeinsamen Radialebene, die bezüglich der Unterseite des Federtellers 116 einen solchen Abstand hat, dass das plattenförmige Bauteil 2 im zusammengebauten Zustand der Schraubverbindung zwischen dem Federteller 116 und der Oberseite der Rasten 115 eingespannt wird.

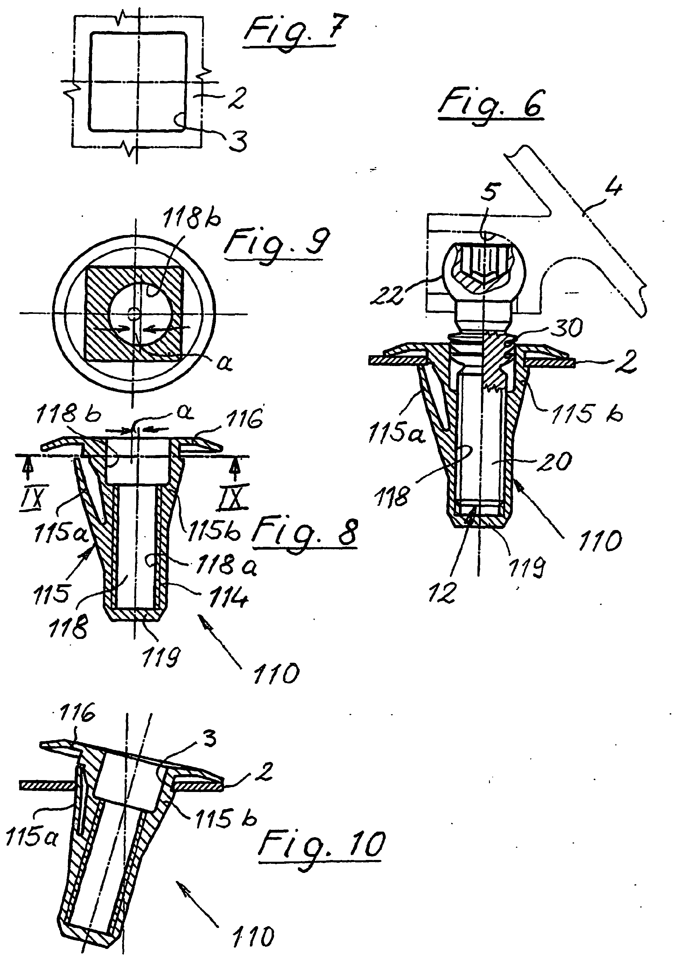

Beim Zusammenbau der Schraubverbindung wird zunächst die Mutter 110 in das Loch 3 des Bauteils 2 eingerastet. Das Loch 3 hat, wie in Fig. 7 zu sehen ist, einen quadratischen Querschnitt, wobei der Querschnitt der Mutter 110 entsprechend angepasst ist. Zum Einrasten der Mutter 110 in dem Loch 3 des Bauteils 2 wird die Mutter 110 zunächst schräg in das Loch 3 so eingeführt, dass die Rastschulter des Rastvorsprungs 115b unter das Bauteil 2 greift, wie in Fig. 10 zu sehen ist. Hierauf wird die Mutter 110 auf der gegenüberliegenden Seite nach unten gedrückt. Die Federzunge 115a verbiegt sich hierbei nach innen. Wenn die Mutter 110 vollständig in das Loch 3 eingedrückt ist, schnappt die Federzunge 115 wieder nach außen, so dass dann das Bauteil 2 zwischen dem Federteller 116 und den Oberseiten der Rasten 115 elastisch eingespannt ist. Die Federzunge 115a ermöglicht aufgrund ihrer Elastizität ein einfaches Einrasten der Mutter 110 im Loch 3 des Bauteils 2, während der massive Rastvorsprung 115b auf der gegenüberliegenden Seite einen sicheren Halt der Mutter 110 am Bauteil 2 gewährleistet.

Wie in den Fign. 8 und 9 zu sehen ist, ist die Mittelachse des glatten zylindrischen Abschnittes 118b der Mutterbohrung 118 gegenüber der Mittelachse des Gewindeabschnittes 118a um ein Maß a exzentrisch angeordnet. Dies ermöglicht es, die Mutter 110 durch Drehen um ihre Längsachse in queraxialer Richtung um das Maß 2xa zu verstellen, um Fehlausrichtungen des Bauteils 4 relativ zu dem Bauteil 2 auszugleichen.

Ein weiterer Unterschied des Ausführungsbeispiels der Fig. 6 bis 10 gegenüber dem vorhergehenden Ausführungsbeispiel besteht darin, dass die Mutter 110 an ihrem unteren Ende 119 verschlossen ist. Die Schraube 12 hat in diesem Fall keine untere Antriebsformation 28. Es versteht sich jedoch, dass auch bei diesem Ausführungsbeispiel die Bohrung 118 der Mutter 110 an beiden Enden offen sein könnte, wie umgekehrt bei dem Ausführungsbeispiel der Fign. 1 bis 5 die Bohrung 18 der Mutter 10 am unteren Ende verschlossen sein könnte.

Die Mutter 110 besteht bei dieser Ausführungsform aus einem Kunststoff wie z. B. einem schlagzähmodifizierten Polyamid 6, das eine für die Mutter, insbesondere den Federteller 116 und die Federzunge 115a, ausreichende Elastizität und Festigkeit hat.

## Patentansprüche

1. Schraubverbindung mit
einer Mutter (10; 110), die in ein Loch (3) eines ersten Bauteils (2) einsteckbar und darin festlegbar ist und die eine Bohrung (18; 118) mit einem Gewindeabschnitt (18a; 118a) und einem glatten Abschnitt (18b; 118b) aufweist, und
einer Schraube (12) mit einem Gewindeschaft (20), der in den Gewindeabschnitt (18a; 118a) der Mutterbohrung (18; 118) einschraubbar ist, einem Kopfteil, und einem Zwischenabschnitt (24), der zwischen dem Gewindeschaft (20) und dem Kopfteil angeordnet ist,
wobei der Zwischenabschnitt (24) der Schraube (12) mit mindestens einer umlaufenden Dichtungsrippe (30) versehen ist, die bezüglich des glatten Abschnittes (18b; 118b) der Mutterbohrung (18; 118) so dimensioniert ist, dass die Dichtungsrippe (30) bei Verstellbewegungen der Schraube (12) relativ zur Mutter (10; 110) abgedichtet an dem glatten Abschnitt (18b; 118b) der Mutterbohrung (18; 118) anliegt,
**dadurch gekennzeichnet,**
**dass** der Kopfteil der Schraube 12 als Kupplungsteil (22) ausgebildet ist, der mit einem Kupplungsteil (5) eines zweiten Bauteils (4) verbindbar ist,
das der Kupplungsteil (22) der Schraube (12) als Kugelkopf und das Kupplungsteil (5) des zweiten Bauteils (4) als Kugelpfanne ausgebildet sind, und
**dass** die Dichtungsrippe (30) bei Verstellbewegungen der Schraube (12) relativ zur Mutter (10; 110) selbsthemmend an dem glatten Abschnitt (18 b; 118 b) der Mutterbohrung (18; 118) anliegt.

2. Schraubverbindung nach Anspruch 2, **dadurch gekennzeichnet, dass** der Zwischenabschnitt (24) der Schraube (12) drei umlaufende Dichtungsrippen (30) zur Anlage an dem glatten Abschnitt (18b; 118b) der Mutterbohrung (18, 118) hat.

3. Schraubverbindung nach Anspruch 1 oder 2, **dadurch gekennzeichnet, dass** der Kupplungsteil (22) der Schraube (12) mit einer Antriebsformation (26) zum Verstellen der Schraube (12) versehen ist.

4. Schraubverbindung nach einem der Ansprüche 1 bis 3, **dadurch gekennzeichnet, dass** die Mutterbohrung (18) an beiden Enden offen ist.

5. Schraubverbindung nach Anspruch 4, **dadurch gekennzeichnet, dass** an dem Gewindeabschnitt (20) der Schraube (12) eine Antriebsformation (28) zum Verstellen der Schraube (12) angeformt ist.

6. Schraubverbindung nach einem der Ansprüche 1 bis 3, **dadurch gekennzeichnet, dass** die Mutterbohrung (118) an einem Ende offen und am anderen Ende geschlossen ist.

7. Schraubverbindung nach einem der Ansprüche 1 bis 6, **dadurch gekennzeichnet, dass** die Mutter (10) als Blindnietmutter ausgebildet ist (Fign. 1 bis 5).

8. Schraubverbindung nach einem der Ansprüche 1 bis 6, **dadurch gekennzeichnet, dass** die Mutter (110) als in das Loch (3) des ersten Bauteils (2) einrastbarer Clip ausgebildet ist (Fign. 6 bis 10).

9. Schraubverbindung nach Anspruch 8, **dadurch gekennzeichnet, dass** an einem Ende der Mutter (110) ein Federteller (116) angeformt ist, der im zusammengebauten Zustand der Schraubverbindung an einer Seite des ersten Bauteils (2) federnd anliegt.

10. Schraubverbindung nach Anspruch 9, **dadurch gekennzeichnet, dass** die Mutter (110) mit Rasten (115) versehen ist, die im zusammengebauten Zustand der Schraubverbindung an der anderen Seite des ersten Bauteils (2) anliegen.

11. Schraubverbindung nach Anspruch 10, **dadurch gekennzeichnet, dass** die Rasten (115) aus einer abstehenden und elastisch einschwenkbaren Federzunge (115a) und einem diametral gegenüberliegenden massiven Rastvorsprung (115b) mit einer Rastschulter bestehen.

12. Schraubverbindung nach einem der vorhergehenden Ansprüche, **dadurch gekennzeichnet, dass** der glatte Abschnitt (118b) der Mutterbohrung (118) zum Einstellen der Schraube (12) in queraxialer Richtung exzentrisch zu dem Gewindeabschnitt (118a) der Mutterbohrung (118) angeordnet ist.

13. Schraubverbindung nach einem der vorhergehenden Ansprüche, **dadurch gekennzeichnet, dass** die Schraube (12) aus einem schlagzähen Kunststoff besteht.

14. Schraubverbindung nach Anspruch 13, **dadurch gekennzeichnet, dass** der schlagzähe Kunststoff Polyamid ist.

15. Schraubverbindung nach Anspruch 13 oder 14, **dadurch gekennzeichnet, dass** der schlagzähe Kunststoff ein verstärkendes Fasermaterial enthält.

16. Schraubverbindung nach einem der vorhergehenden Ansprüche, **dadurch gekennzeichnet, dass** die Mutter (10; 110) aus Metall oder Kunststoff besteht.

17. Schraubverbindung nach einem der vorhergehenden Ansprüche, **dadurch gekennzeichnet, dass** das erste Bauteil (2) plattenförmig ausgebildet ist und das Loch (3) zur Drehsicherung der Mutter (10; 110) unrund ist.

18. Schraubverbindung nach einem der vorhergehenden Ansprüche, **dadurch gekennzeichnet, dass** das zweite Bauteil (4) ein Halter für eine Fahrzeug-Rückleuchte ist, wobei zwischen der Fahrzeugleuchte und anderen Fahrzeugteilen ein Spalt vorhanden ist, der durch die Verstellbarkeit der Schraubverbindung minimierbar ist.

## Claims

1. A threaded connection comprising
a nut (10; 110) adapted to be inserted and mounted into a hole (3) of a first structural member (2) and having a bore (18; 118) comprising a threaded portion (18a; 118a) and a smooth portion (18b; 118b), and
a bolt (12) comprising a threaded stem (20) adapted to threadingly engage the threaded portion (18a; 118a) of the nut bore (18; 118), a head portion, and an intermediate portion (24) position between the threaded stem (20) and the head portion,
the intermediate portion (24) of the bolt (12) being provided with at least on circumferential sealing rib (30) dimensioned with respect to the smooth portion (18b; 118b) of the nut bore (18; 118) such that the sealing rib (30) sealingly engages the smooth portion (18b; 118b) of the nut bore (18, 118) during adjustment movements of the bolt (12) relative to the nut (10; 110),
**characterized in**
**that** the head portion of the bolt (12) is formed as a coupling portion (22) adapted to be connected to a coupling portion (5) of a second structural member (4),
**that** the coupling portion (22) of the bolt (12) is formed as a ball head and the coupling portion (5) of the second structural member (4) is formed as a ball cup, and
**that** the sealing rib (30) engages the smooth portion (18b; 118b) of the nut bore (18; 118) in self-locking relationship during adjustment movements of the bolt (12) relative to the nut (10; 110).

2. The threaded connection of claim 1 **characterized in that** the intermediate portion (24) of the bolt (12) has three circumferential sealing ribs (30) adapted to engage the smooth portion (18b; 118b) of the nut bore (18; 118).

3. The threaded connection of claim 1 or 2 **characterized in that** the coupling portion (22) of the bolt (12) is provided with a drive formation (26) for adjustment of the bolt (12).

4. The threaded connection of any of claims 1 to 3 **characterized in that** the nut bore (18) is open at both ends.

5. The threaded connection of claim 4 **characterized in that** a drive formation (28) for adjusting the bolt (12) is integrally provided at the threaded portion (20) of the bolt (12).

6. The threaded connection of any of claims 1 to 3 **characterized in that** the nut bore (118) is open at one end and closed at the other end.

7. The threaded connection of any of claims 1 to 6 **characterized in that** the nut (10) is a blind rivet nut (figs. 1 to 5).

8. The threaded connection of any of claim 1 to 6 **characterized in that** the nut (110) is a clip to be snapingly received in the hole (3) of the first structural member (2) (figs. 6 to 10).

9. The threaded connection of claim 8 **characterized in that** at one end of the nut (110) there is integrally provided a spring disk (116) resiliently engaging one side of the first structural member (2) in the assembled condition.

10. The threaded connection of claim 9 **characterized in that** the nut (110) is provided with snap-lock means (115) which engage the other side of the first structural member (2) in the assembled condition of the threaded connection.

11. The threaded connection of claim (10) **characterized in that** the snap-lock means comprise a projecting and resiliently deflectable spring arm (115a) and a diametrically opposite solid locking projection (115b) with a locking shoulder.

12. The threaded connection of any of the proceeding claims **characterized in that** the smooth portion (118b) of the nut bore (118) is positioned so as to be eccentric with respect to the threaded portion (118a) of the nut bore (118) in a transverse direction for adjustment of the bolt (12).

13. The threaded connection of any of the proceeding claims **characterized in that** the bolt (12) is made of an impact resistant plastic material.

14. The threaded connection of claim 13 **characterized in that** the impact resistant plastic material is polyamide.

15. The threaded connection of claim 13 or 14 **characterized in that** the impact resistant plastic material includes fiber reinforced material.

16. The threaded connection of any of the proceeding claims **characterized in that** the nut (10; 110) is made of metallic or plastic material.

17. The threaded connection of any of the proceeding claims **characterized in that** the first structural member (2) is plate-shaped and the hole (3) is non-circular for preventing the nut (10; 110) from rotational movements.

18. The threaded connection of any of the proceeding claims **characterized in that** the second structural member (4) is a holder for a vehicle backlight, a gap being provided between the backlight and another vehicle member, which gap may be minimized by adjustment of the threaded connection.

## Revendications

1. Assemblage vissé, avec
un écrou (10 ; 110) qui peut être enfiché dans un trou (3) d'un premier composant (2) et qui peut y être fixé, et qui présente un alésage (18 ; 118) avec un tronçon fileté (18a ; 118a) et un tronçon lisse (18b ; 118b), et
une vis (12) avec une tige filetée (20) qui peut être vissée dans le tronçon fileté (18a ; 118a) de l'alésage d'écrou (18 ; 118), une partie de tête, et un tronçon intermédiaire (24) qui est disposé entre la tige filetée (20) et la partie de tête,
le tronçon intermédiaire (24) de la vis (12) étant disposé avec au moins une nervure d'étanchéité (30) périphérique qui, par rapport au tronçon (18b ; 118b) lisse de l'alésage d'écrou (18 ; 118), est dimensionnée de sorte que la nervure d'étanchéité (30), lors de mouvements de déplacement de la vis (12) par rapport à l'écrou (10; 110), repose de façon étanche sur le tronçon (18b ; 118b) lisse de l'alésage d'écrou (18; 118),
**caractérisé en ce que**
la partie de tête de la vis (12) est réalisée en tant que pièce d'accouplement (22) qui peut être raccordée à une pièce d'accouplement (5) d'un deuxième composant (4),
la pièce d'accouplement (22) de la vis (12) est réalisée en tant que tête sphérique, et la pièce d'accouplement (5) du deuxième composant (4) est réalisée en tant que coussinet sphérique, et
la nervure d'étanchéité (30), lors de mouvements de déplacement de la vis (12) par rapport à l'écrou (10 ; 110), repose de façon autofreinée sur le tronçon (18b ; 118b) lisse de l'alésage d'écrou (18 ; 118).

2. Assemblage vissé selon la revendication 2, **caractérisé en ce que** le tronçon intermédiaire (24) de la vis (12) a trois nervures d'étanchéité (30) périphériques pour l'appui sur le tronçon (18b ; 118b) lisse de l'alésage d'écrou (18 ; 118).

3. Assemblage vissé selon la revendication 1 ou 2, **caractérisé en ce que** la pièce d'accouplement (22) de la vis (12) est munie d'une formation d'entraînement (26) pour le déplacement de la vis (12).

4. Assemblage vissé selon une des revendications 1 à 3, **caractérisé en ce que** l'alésage d'écrou (18) est ouvert aux deux extrémités.

5. Assemblage vissé selon la revendication 4, **caractérisé en ce que**, sur le tronçon fileté (20) de la vis (12), il est formé une formation d'entraînement (28) pour le déplacement de la vis (12).

6. Assemblage vissé selon une des revendications 1 à 3, **caractérisé en ce que** l'alésage d'écrou (118) est ouvert à une extrémité et fermé à l'autre extrémité.

7. Assemblage vissé selon une des revendications 1 à 6, **caractérisé en ce que** l'écrou (10) est réalisé en tant qu'écrou à rivet aveugle (figures 1 à 5).

8. Assemblage vissé selon une des revendications 1 à 6, **caractérisé en ce que** l'écrou (110) est réalisé en tant que clip pouvant être enclenché dans le trou (3) du premier composant (2) (figures 6 à 10).

9. Assemblage vissé selon la revendication 8, **caractérisé en ce que**, sur une extrémité de l'écrou (110), il est formé une rondelle Belleville (116) qui, dans l'état assemblé de l'assemblage vissé, repose de façon élastique sur un côté du premier composant (2).

10. Assemblage vissé selon la revendication 9, **caractérisé en ce que** l'écrou (110) est muni de crans (115) qui, dans l'état assemblé de l'assemblage vissé, reposent sur l'autre côté du premier composant (2).

11. Assemblage vissé selon la revendication 10, **caractérisé en ce que** les crans (115) sont constitués d'une languette élastique (115a) faisant saillie et pivotant de façon élastique et d'une saillie crantée (115b) massive diamétralement opposée, avec un épaulement cranté.

12. Assemblage vissé selon une des revendications précédentes, **caractérisé en ce que** le tronçon (118b) lisse de l'alésage d'écrou (118) est, pour le réglage de la vis (12) dans la direction de l'axe transversal, disposé de façon excentrée par rapport au tronçon fileté (118a) de l'alésage d'écrou (118).

13. Assemblage vissé selon une des revendications précédentes, **caractérisé en ce que** la vis (12) est constituée d'une matière plastique résiliente.

14. Assemblage vissé selon la revendication 13, **caractérisé en ce que** la matière plastique résiliente est du polyamide.

15. Assemblage vissé selon la revendication 13 ou 14, **caractérisé en ce que** la matière plastique résiliente contient un matériau de fibres de renfort.

16. Assemblage vissé selon une des revendications précédentes, **caractérisé en ce que** l'écrou (10 ; 110) est constitué de métal ou de matière plastique.

17. Assemblage vissé selon une des revendications précédentes, **caractérisé en ce que** le premier composant (2) est réalisé en forme de plaque et **en ce que** le trou (3) est ovale pour le blocage en rotation de l'écrou (10 ; 110).

18. Assemblage vissé selon une des revendications précédentes, **caractérisé en ce que** le deuxième composant (4) est un élément de retenue pour un feu de recul de véhicule, un intervalle étant prévu entre le feu du véhicule et d'autres pièces du véhicule, lequel intervalle peut être minimisé par l'aptitude au réglage de l'assemblage vissé.
